# EUROPEAN PATENT APPLICATION

(11) **EP 1 947 372 A1**
(43) Date of publication of application: **23.07.2008**
(21) Application number: 07001016.0
(22) Date of filing: 18.01.2007
(51) Int. Cl.: F16H 61/30, F15B 20/00

(54) **A gear shift system with a power assistance system**

(71) Applicant: Kongsberg Automotive AS, 3601 Kongsberg (NO)
(72) Inventor: Kallenius, Rikard, 3612 Kongsberg (NO)
(74) Representative: UEXKÜLL & STOLBERG

(57) **Abstract**

The present invention relates to a gear shift system comprising a power assistance system with a servo cylinder (7), a piston (10) in the cylinder (7) separating a first and a second chamber in the cylinder (7), and an assistance pressure supply connected via a control valve system (3) to at least one of the first and the second chamber to provide pneumatic assistance power by the piston (10). According to the invention each of those chambers that are connected to the control valve system (3) is provided with at least one valve (9) in communication with the chamber and adapted such that the assistance power is prevented from increasing above a threshold value by limiting the pressure difference between the two chambers.

## Description

The present invention relates to a gear shift system comprising a power assistance system with a servo cylinder, a piston in the cylinder separating a first and a second chamber in the cylinder, and an assistance pressure supply connected via a control valve system to at least one of the first and the second chamber to provide pneumatic assistance power by the piston.

Manual shifting systems for heavy vehicles are commonly equipped with a servo cylinder to provide assistance force allowing the driver to shift gears easily. Implementing an assistance force increases the total force on the gear shift system substantially. Thus, there is an enhanced risk of damaging the gear box by applying an excessive force. Especially, the synchronisation rings will be damaged if they are exposed to an exceedingly high total force.

There are mechanisms or devices known as servo reducer in the prior art providing solutions to the mentioned problem by reducing the assistance force and the total force in the gear box. Such a servo reducer is described in WO 2005/119100, where the total force on the shift lever is held constant or where it is even reduced when the force on the shift lever exceeds a predefined threshold value. On the one hand a very good gear box protection and a comfortable gear lever handling is provided. On the other hand the solution described is rather complex and expensive regarding the production costs and size.

US 6,851,350 presents an actuating pneumatic cylinder with a piston provided with non-return valves in combination with external solenoid valves to prevent an unintended release of a clutch.

Documents WO 00/14437 and WO 2005/022007 describe assisted gear shift systems with a reducing mechanism controlling the assistance pressure supplied.

All these known solutions have the drawback of a more or less complex external reducing mechanism, which is expensive regarding the production costs and size.

The object of the present invention is to achieve a simple, less costly and more space saving servo reducer in an assisted gear shift system for providing a sufficient gear box protection and a comfortable gear lever handling.

According to the present invention the reducing mechanism is integrated in the servo cylinder, which is subdivided by a piston into two chambers, by at least one valve in communication with at least one of those chambers that are connected to the control valve system of the servo assistance and adapted such that the assistance power is prevented from increasing above a threshold value by limiting the pressure difference between the two chambers.

Preferably, the type of the used valve(s) is a check valve that allows an air flow to the outside of a chamber. This check valve preferably comprises a valve seat, a valve body and a valve spring biasing the valve body against the valve seat, wherein the valve body is arranged to be lifted from the valve seat at a threshold value of the pressure difference between the inlet and the outlet of the valve.

In a preferred embodiment of the present invention, both chambers that are separated by the piston in the servo cylinder are connected to an assistance air pressure supply via a control valve system. Depending on the gear select command that is received by the control valve system one chamber is pressurised while the other is vented. The bidirectional piston movement that is steeply coupled to the gear lever movement is assisted by the corresponding air pressure in one or the other chamber of the servo cylinder. In this embodiment it is advantageous to arrange two check valves in the piston such that an air flow from one chamber to the other is allowed when one valve is opened and the contrary flow is allowed when the other is opened. However, one or more valves can also be arranged in the cylinder wall if desired.

The present invention achieves the goal of a less costly and more space saving servo reducer, because no complex external reducing mechanism is needed. With the pressure assistance a comfortable gear lever handling is provided by a continuous servo force assisting the gear lever shifting.

A preferred, non-limiting embodiment of the present invention will now be described in more detail with references to the accompanying drawings, where:
Figure 1 is a perspective view of the gear shift system with a piston valve servo reducer.
Figure 2 is a schematic cross-sectional side view of the gear shift system in neutral gear position comprising a piston valve servo reducer with two valves (check valves) contrarily arranged in the piston.
Figure 3 illustrates qualitatively the forces transmitted to the gear box as a function of the force applied by the driver.
Figure 4 is a schematic cross-sectional side view of the gear shift system in an active gear position with a piston valve servo reducer, while the driver applies a normal force. Detail views 4a and 4b show the state of the two valves (check valves).
Figure 5 is a schematic cross-sectional side view of the gear shift system in an active gear position with a piston valve servo reducer, while the driver applies a high force. Detail views 5a and 5b show the state of the two valves (check valves).
Figure 6 is a cross-sectional side view of the gear shift system in neutral gear position comprising a piston valve servo reducer with two valves contrarily arranged in the cylinder wall.

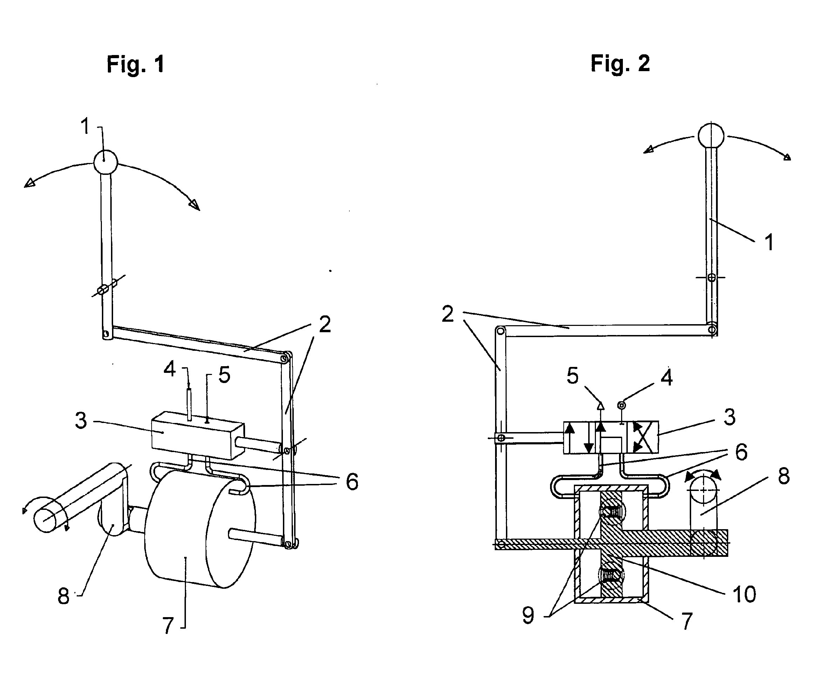

Figure 1 shows the gear shift system in neutral gear position with a piston valve servo reducer comprising a gear lever 1 in connection with a gearbox shift lever 8 via a rod linkage system 2. The rod linkage system 2 transfers force applied by the driver on the gear lever 1 to a piston 10 (not shown in Fig. 1) inside a servo shift cylinder 7. The rod linkage system 2 also communicates with a control valve system 3. The control valve system 3 comprises preferably a 3-way valve which is connected via tubes 6 to the chambers inside the servo shift cylinder 7. In an alternative embodiment of the invention, the control valve system 3 may be arranged in contact with the servo shift cylinder 7 and in direct communication with bores in the cylinder wall which may replace tubes 6. The control valve system 3 is provided with an air supply inlet 4 and an exhaust air outlet 5 which can both be connected via the tubes 6 to one or both of the chambers in the servo shift cylinder 7 depending on the operation mode of the control valve system 3. This operation mode is determined by the communication with the rod linkage system 2 and the corresponding position of the gear lever 1.

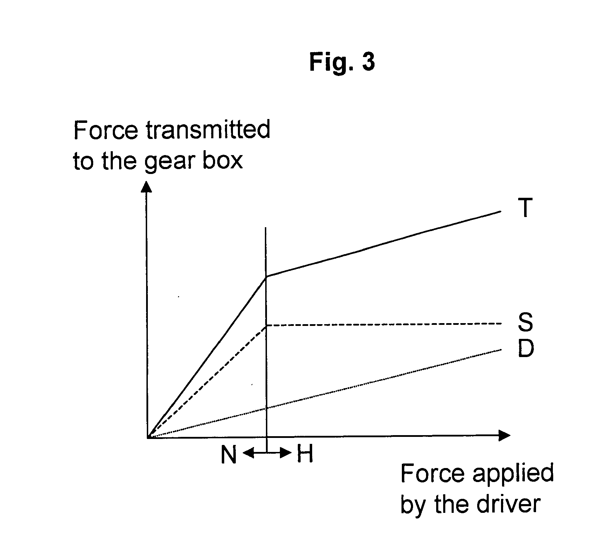

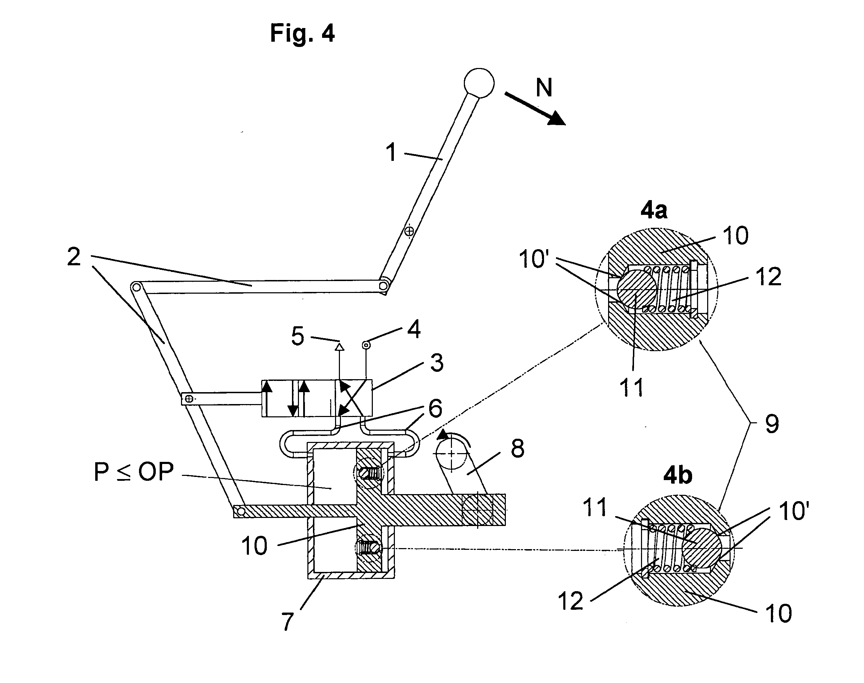

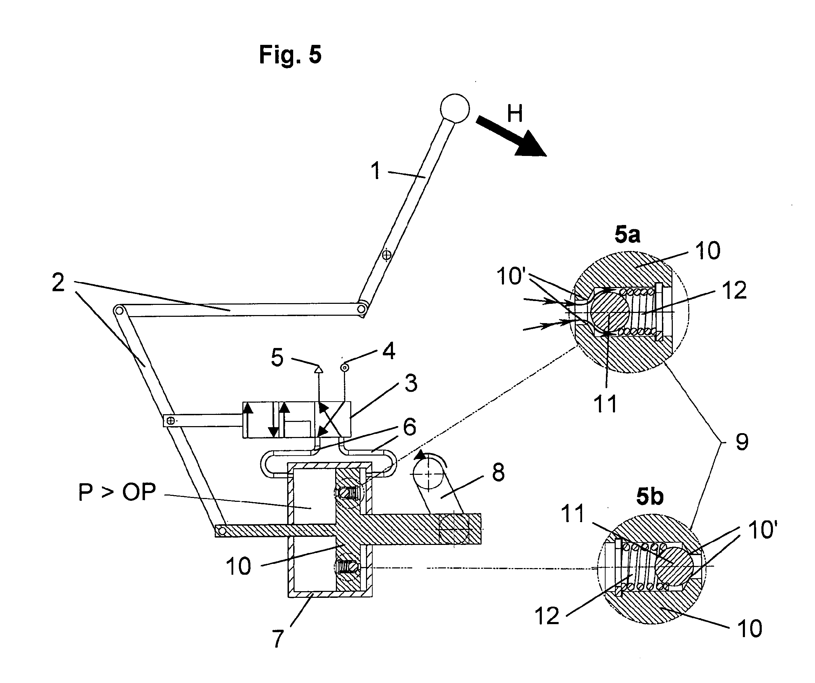

Figure 2 shows the piston 10 inside the servo shift cylinder 7. The bidirectional movement of piston 10 is steeply coupled to the rod linkage system 2. The piston separates two chambers inside the servo shift cylinder 7 which are each connected to the control valve system 3 via tubes 6. The piston is provided with valves 9 that are arranged inside the piston 10 such that an air flow from one chamber to the other is allowed when one valve is opened and the contrary flow is allowed when the other is opened. The shown neutral position of the gear lever 1 results in a neutral position of the rod linkage system 2 and therefore in a position of the piston 10 inside the servo shift cylinder 7 such that the cylinder is subdivided into two chambers of similar size. In this position the operation mode of the control valve system 3 is such that both chambers are connected to the exhaust air outlet 5. Both chambers are therefore vented and no assisting force on the piston 10 is applied by the servo assistance in a neutral gear position. Equivalently to the shown neutral gear position, no servo assistance force and vented chambers prevail in any other adjusted gear position when no force is applied to the gear lever (see Fig. 3). Only as soon as a force is applied to the gear lever for shifting of gears, a servo assistance force is applied as depicted in Figs. 4 and 5.

Figure 3 illustrates qualitatively the forces transmitted to the gear box as a function of the force applied by the driver. The total force T transmitted to the gear box is a sum of the two forces, the manual force D applied by the driver and the assisting force S from the servo shift cylinder. As long as the manual force D is normal (N), the assisting force S increases proportionally with the manual force D and adds up to it yielding a linearly increasing total force T on the gear box. As soon as the manual force D exceeds a certain value, it will be referred to as high (H) in the following. At this point, when the manual force D is high, one of the valves 9 actuates and the assisting force S does not increase any further and stays constant. The total force shows a kink and increases with a significantly reduced slope corresponding to the high manual force D. As the total force T is commonly about factors higher than the manual force D, the risk of reaching a total force T above a critical value and damaging the gear box is very low, albeit damaging is not completely ruled out.

Figure 4 shows the gear shift system in an active gear position with a normal (N) manual force D on the gear lever. Starting with vented chambers in an adjusted gear position, the first (left) chamber in the servo shift cylinder 7 is pressurised in an active position yielding an air pressure difference P between the two chambers that is below the opening pressure difference OP of the valves 9. In this mode of the control valve system 3 the first chamber is connected to the air supply inlet 4 via the first (left) tube 6. The second (right) chamber has ambient air pressure as it stays connected to the exhaust air outlet 5 via the second (right) tube 6. In an alternative embodiment of the invention, the control valve system 3 may be arranged in contact with the servo shift cylinder 7 and in direct communication with bores in the cylinder wall which may replace tubes 6. The detail views 4a and 4b show the valves 9 in a closed state. Inside a bore in the piston 10 a valve spring 12 biases the valve body 11 against the valve seat 10'. The two valves 10 are arranged contrarily to each other such that an air flow from one chamber to the other is allowed when one valve is opened and the contrary flow is allowed when the other is opened. The contrary gear shift action controls the control valve system (3) to vent the first chamber while the second chamber is pressurised (not shown). The contrary assisting process as described above applies to the contrary gear shift action accordingly.

Figure 5 shows the same gear position when a high (H) manual force D is applied to the gear lever. The pressure difference P between the two chambers is for a moment above the opening pressure difference OP of the valves 9. In this embodiment the upper valve 9 will be actuated then. The valve body 11 is lifted up from the valve seat 10' by the pressure difference P between the chambers and the valve spring 12 is compressed. An indicated air flow into the vented second chamber will immediately reduce the pressure difference P between the two chambers until it is below the opening pressure difference OP of the valves 9. At this point the previously opened upper valve 9 closes again, as the valve spring 12 biases the valve body 11 against the valve seat 10'. Therefore, no high pressure difference P above the opening pressure difference OP can build up in the servo shift cylinder, which limits the assisting force S to a maximal value. It is to be understood that the contrary limiting process as described applies to both actions of moving the gear lever forward and backward accordingly.

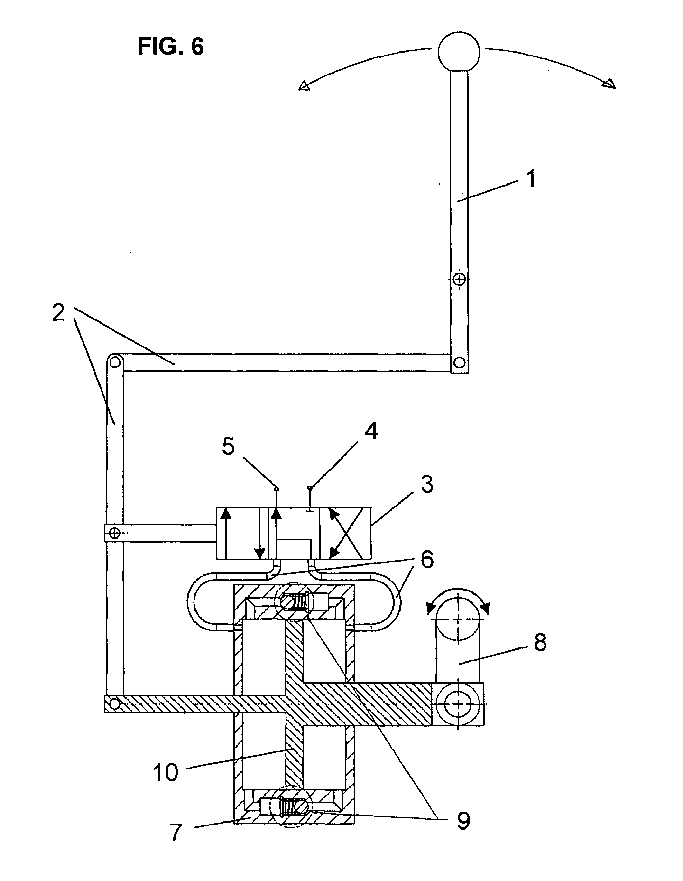

Figure 6 shows another preferred embodiment of the gear shift system in neutral gear position where the valves 9 are arranged in the wall of the servo shift cylinder 7. Inlet and outlet of the valves 9 are connected via channels in the wall with the one and the other chamber, respectively. In an opened state of the valves 9 an air flow between the chambers of the servo shift cylinder 7 through the channels is enabled with a direction depending on whether the one or the other valve 9 is opened.

## Claims

1. A gear shift system comprising a power assistance system with a servo cylinder (7), a piston (10) in the cylinder (7) separating a first and a second chamber in the cylinder (7), and an assistance pressure supply connected via a control valve system (3) to at least one of the first and the second chamber to provide pneumatic assistance power by the piston (10),
**characterised in that**
each of those chambers that are connected to the control valve system (3) is provided with at least one valve (9) in communication with the chamber and adapted such that the assistance power is prevented from increasing above a threshold value by limiting the pressure difference between the two chambers.

2. A gear shift system according to claim 1, wherein the assistance pressure supply is connected via a control valve system (3) to both chambers.

3. A gear shift system according to claim 2, wherein the control valve system (3) receives a gear shift command and controls whether the first or the second chamber is pressurised to assist the piston (10) movement in the one or the other direction.

4. A gear shift system according to any one of the preceding claims, wherein said at least one valve (9) is a check valve.

5. A gear shift system according to any one of the preceding claims, wherein said at least one valve (9) is in an opened state when the pressure difference between the inlet and the outlet of the valve is above a threshold value.

6. A gear shift system according to any one of the preceding claims, wherein said at least one valve (9) permits an air flow in an opened state.

7. A gear shift system according to any one of the preceding claims, wherein said at least one valve (9) is arranged in the piston (10) permitting a pressure flow from the first to the second chamber.

8. A gear shift system according to claim 7, wherein another valve (9) is arranged in the piston (10) permitting a pressure flow from the second to the first chamber.

9. A gear shift system according to claims 1 to 6, wherein said at least one valve (9) is arranged in the cylinder (7) wall permitting a pressure flow to the outside of the chamber.

10. A gear shift system according to claims 1 to 6, wherein said at least one valve (9) is arranged in the cylinder (7) wall permitting a pressure flow via channels from the first to the second chamber.

11. A gear shift system according to claim 10, wherein another valve (9) is arranged in the cylinder (7) wall permitting a pressure flow via channels from the second to the first chamber.

12. A gear shift system according to any of the preceding claims, wherein said at least one valve (9) comprises a valve seat (10'), a valve body (11) and a valve spring (12) biasing the valve body (11) against the valve seat (10').

13. A gear shift system according to any of the preceding claims, wherein the valve body (11) is arranged to lift from the valve seat (10') at a threshold value of the pressure difference between the inlet and outlet of the valve (9).
